# FASCICULE DE BREVET EUROPEEN

(11) **EP 4 210 890 B1**
(45) Date de publication et mention de la délivrance du brevet: **18.02.2026**
(21) Numéro de dépôt: 21762328.9
(22) Date de dépôt: 31.08.2021
(51) Int. Cl.: B23K 9/127, B23K 9/235, B25J 9/00, B25J 13/00, G05B 13/00, B23K 9/095, B23K 26/03, B23K 26/035, B23K 9/10, B23K 26/08

(54) **PROCEDE D'ASSISTANCE AU SOUDAGE POUR UN DISPOSITIF ROBOTISE**
SCHWEISSHILFSVERFAHREN FÜR EINE ROBOTERVORRICHTUNG
WELDING ASSISTANCE METHOD FOR A ROBOT DEVICE

(30) Priorité: 08.09.2020 FR 2009076
(43) Date de publication de la demande: 19.07.2023
(73) Titulaire: Weez-U Welding, 44000 Nantes (FR)
(72) Inventeur: GUILLERMIT, Yves, 44000 NANTES (FR); TAVERNIER, Benoit, 44500 LA BAULE (FR)
(74) Mandataire: Marconnet, Sébastien
(86) Numéro de dépôt international: PCT/EP2021/074023
(87) Numéro de publication internationale: WO 2022/053354

(56) Documents cités:
- EP-B1- 0 517 220
- EP-B1- 0 842 725
- CN-A- 111 152 221
- ROBOTIQ: "Teaching Robot Welder with External Axis", 11 September 2014 (2014-09-11), pages 1 - 2, XP054981891, Retrieved from the Internet <URL:https://www.youtube.com/watch?v=MO_RiMgM9Gc> [retrieved on 20210610]

## Description

La présente invention porte sur un procédé d'assistance au soudage pour un dispositif robotisé (voir, par exemple, EP0517220B1).

De façon connue en soi, la soudure consiste à lier mécaniquement deux pièces métalliques par apport de chaleur et éventuellement de matière. La chaleur permet d'atteindre de manière transitoire la température de fusion des métaux. En refroidissant, les métaux réalisent la jonction des pièces.

Les procédés de soudage métallique sont nombreux (MIG (pour "Metal Inert Gas" en anglais), MAG (pour "Metal Active Gas" en anglais), TIG (pour "Tungsten Inert Gas" en anglais), Laser, Hybride, sous flux, ou autre) et dépendent de trois caractéristiques principales:
- le moyen d'apport de la chaleur: électrode fusible (MIG, MAG), électrode infusible (TIG), Laser, ou autre,
- le mode d'apport de matériau: fil conjoint avec la chaleur (MIG, MAG), baguette disjointe de l'apport de chaleur (TIG), l'absence d'apport de matériau, et
- le mode de protection de la soudure: la période transitoire de fusion rend les métaux sensibles à la pollution de sorte que le bain de fusion doit être protégé (gaz inerte, gaz actif, flux).

Quel que soit le procédé utilisé, il est extrêmement dynamique et sa modélisation précise n'est pas maitrisée. Deux contraintes principales sont toutefois connues, à savoir:
- un grand niveau de précision géométrique: le point d'impact de l'apport de chaleur doit être ajusté avec une précision de l'ordre du dixième de millimètre, et
- une forte réactivité aux aléas de soudage: lorsqu'un aléa intervient, le temps de réaction disponible est très court, de l'ordre du dixième de seconde.

Ces contraintes ainsi que l'exposition à la chaleur, aux fumées de soudage et aux postures pénibles rendent le métier de soudeur pénible.

Afin de remédier à la pénibilité du métier, il est possible d'automatiser le procédé de soudure à l'aide de robots de soudage. Par exemple, dans le domaine de l'automobile, il est connu d'utiliser des robots fixes devant lesquels passent des véhicules à une cadence régulière. Les robots déploient alors leur bras sur des positions prédéterminées et délivrent un apport de chaleur prédéterminé pour effectuer une soudure.

Alternativement, les pièces sont présentées devant un bras robotique dans une position optimale par un positionneur et les séquences de soudages sont prédéterminées. Les positions de soudages sont limitées à celles où la gravité s'exerçant sur le bain participe à sa stabilisation (position PA ou PB selon la norme EN 287-1).

Toutefois, il n'est pas possible d'automatiser la soudure pour des pièces de grandes tailles, uniques, et complexes qui nécessiteraient de nombreuses heures de programmation non rentables pour un soudage unique.

En outre, les caractéristiques spécifiques de certains assemblages, telles que des jeux variables, entraînent un comportement du bain de soudage trop complexe pour qu'un système automatique réalise la soudure sans défaut.

Il existe donc le besoin de pouvoir utiliser un robot de soudage soulageant la posture du soudeur et autorisant un opérateur humain expérimenté à ajuster en temps réel le bain de soudure en réaction à l'observation de l'évolution de la soudure.

L'invention vise à combler efficacement ce besoin en proposant un procédé d'assistance au soudage entre deux pièces suivant une ligne de soudure à l'aide d'un système de soudage permettant à un opérateur d'effectuer à distance des opérations de soudage, ledit système de soudage comportant :
- un dispositif robotisé portant une torche de soudage, ledit dispositif robotisé étant associé à un repère de robot,
- une interface homme-machine apte à générer des instructions de déplacement du dispositif robotisé, et
- un système de commande apte à recevoir les instructions de déplacement issues de l'interface homme-machine et à commander le dispositif robotisé en fonction des instructions de déplacement reçues via une liaison de communication,
caractérisé en ce que ledit procédé d'assistance au soudage comporte:
- une étape de définition par l'opérateur de points de référence sur les pièces à souder et/ou sur la ligne de soudure à suivre,
- une étape de définition d'une direction générale de déplacement de la torche de soudage à partir des points de référence,
- une étape de définition d'un repère local par rapport à la direction générale de déplacement de la torche de soudage,
- une étape de déplacement automatique de la torche de soudage depuis un point de départ de soudure suivant la direction générale de déplacement,
- une étape de génération d'un flux d'instructions de déplacement lié à des actions de l'opérateur sur l'interface homme-machine visant à écarter la torche de soudage de la direction générale de déplacement de façon à adapter en temps réel une trajectoire de la torche de soudage à une forme réelle de la ligne de soudure,
- une étape de traitement, par le système de commande, du flux d'instructions de déplacement généré par l'interface homme-machine pour en déduire un vecteur de vitesse de consigne ou une position de consigne dans le repère local, et
- une étape de déplacement effectif de la torche correspondant au vecteur de vitesse de consigne ou à la position de consigne dans le repère local.

Selon une mise en œuvre de l'invention, pour assurer le déplacement effectif de la torche, ledit procédé comporte en outre:
- une étape de transposition du vecteur de vitesse de consigne ou de la position de consigne dans le repère de robot,
- une étape de détermination, à partir de coordonnées du vecteur de vitesse de consigne ou de la position de consigne dans le repère de robot, de coordonnées articulaires du dispositif robotisé, et
- une étape de déplacement effectif de la torche de soudage suivant les coordonnées articulaires précédemment déterminées correspondant au flux d'instructions généré par l'interface homme-machine. Cette étape utilise généralement une logique d'asservissement.

L'invention permet ainsi d'assister le soudeur par la mise en place d'une télé-opération permettant de soustraire le soudeur aux contraintes pénibles de l'opération de soudage. L'invention permet en outre à l'opérateur de détecter et réagir aux aléas de la soudure tout en ayant une grande liberté dans la trajectoire de soudage qui n'est pas imposée par le système.

Selon une mise en œuvre de l'invention, la direction générale de déplacement est une direction ayant une forme choisie notamment parmi: une ligne droite, un cercle ou une portion de cercle, une forme ovale ou une portion de forme ovale, un polygone ou une portion de polygone, une intersection de deux cylindres ou une portion d'intersection de deux cylindres, ou une courbe quelconque 2D ou 3D.

Selon une mise en œuvre de l'invention, ledit procédé comporte une étape préalable de réglage suivant laquelle, suite à la définition de points de référence constitués par un point de départ de soudure et un point d'arrivée de soudure et de la direction générale de déplacement de la torche de soudage, ladite torche de soudage se déplace depuis un point de dégagement situé à proximité du point d'arrivée de soudure jusqu'à un point de dégagement situé à proximité du point de départ de soudure pour s'assurer qu'il n'existe pas d'interférence entre la torche de soudage et son environnement pour effectuer la soudure.

Selon une mise en œuvre de l'invention, après avoir défini globalement un point de départ de soudure et un point d'arrivée de soudure, et validé une trajectoire par un trajet retour, l'opérateur peut procéder à un réglage fin de la position de départ.

Selon une mise en œuvre de l'invention, une durée de latence entre un actionnement de l'interface homme-machine par l'opérateur et un déplacement effectif de la torche de soudage est inférieure à 450ms.

Selon une mise en œuvre de l'invention, le repère local comporte un axe XI confondu avec la direction générale de déplacement de la torche de soudage, un axe ZI correspondant à une projection d'une direction d'orientation de la torche de soudage dans un plan perpendiculaire à l'axe XI, et un axe YI perpendiculaire au plan défini par l'axe XI et l'axe ZI.

Selon une mise en œuvre de l'invention, dans le cas d'une ligne de soudure courbe, le repère local peut évoluer le long de la ligne de soudure, de telle façon que l'axe reste tangent à la ligne de soudure.

Alternativement, le repère local pourrait être défini par rapport aux pièces à souder.

Selon une mise en œuvre de l'invention, un déplacement automatique suivant l'axe XI étant imposé par le dispositif robotisé, l'opérateur peut ajuster un déplacement de la torche de soudage via l'interface homme-machine, uniquement selon l'axe YI et/ou l'axe ZI.

Selon une mise en œuvre de l'invention, ledit procédé comporte en outre l'étape d'adapter une vitesse de déplacement de la torche de soudage suivant l'axe XI via l'interface homme-machine.

Selon une mise en œuvre de l'invention, la vitesse de déplacement est encadrée entre une valeur minimale et une valeur maximale.

Selon une mise en œuvre de l'invention, ledit procédé comporte une étape de réglage d'une orientation angulaire de la torche de soudage par rapport à la ligne de soudure.

Selon une mise en œuvre de l'invention, le système de soudage comporte en outre une caméra, et un écran de contrôle affichant une image de la ligne de soudure et de la torche de soudage captée par la caméra.

Selon une mise en œuvre de l'invention, un axe de la caméra est confondu avec la direction générale de déplacement de sorte qu'une image affichée par l'écran se situe dans le plan YI/ZI.

Selon une mise en œuvre de l'invention, ledit procédé comporte une étape d'établissement d'une communication avec un générateur de soudage pour modifier des paramètres de soudage depuis l'interface homme-machine et pour afficher ces paramètres de soudage sur l'interface homme-machine.

Selon une mise en œuvre de l'invention, un appui continu sur un bouton de sécurité de l'interface homme-machine est imposé lors d'une phase de réalisation d'une soudure par le dispositif robotisé.

Selon une mise en œuvre de l'invention, un appui continu sur un bouton de sécurité de l'interface homme-machine est imposé lors d'une phase de réglage consistant à définir les points de référence.

Selon une mise en œuvre de l'invention, le dispositif robotisé comporte plusieurs actionneurs montés mécaniquement en série les uns par rapport aux autres.

Selon une mise en œuvre de l'invention, le dispositif robotisé comporte plusieurs actionneurs montés mécaniquement en parallèle les uns par rapport aux autres.

Selon une mise en œuvre de l'invention, le dispositif robotisé comporte une structure réalisée dans un matériau allégé, notamment de l'aluminium ou un matériau composite.

Selon une mise en œuvre de l'invention, le dispositif robotisé comporte une base munie de moyens de maintien amovibles pour fixer le dispositif robotisé sur ou à proximité des pièces à souder.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une représentation schématique d'un système de soudage selon la présente invention;
[Fig. 2] La figure 2 montre une vue en perspective d'un bras robotisé auquel est associé un repère spatial, dit repère de robot;
[Fig. 3] La figure 3 montre un diagramme fonctionnel des étapes du procédé de soudage selon la présente invention;
[Fig. 4] La figure 4 est une vue en perspective de deux pièces planes destinées à être soudées au moyen du procédé selon la présente invention;
[Fig. 5] La figure 5 illustre la définition d'un repère local utilisé pour permettre à l'opérateur de définir des flux d'instructions de déplacement lors d'une phase de soudage;
[Fig. 6] La figure 6 illustre l'angle de vision des pièces à souder dans le plan d'une caméra dans lequel la torche de soudage est orientée suivant une direction verticale;
[Fig. 7] La figure 7 montre les positions et les orientations d'une torche de soudage dans le cas d'une réalisation d'une ligne de soudure en forme de U;
[Fig. 8] La figure 8 montre les positions et les orientations d'une torche de soudage dans le cas d'une réalisation d'une ligne de soudure de forme circulaire;
[Fig. 9] La figure 9 montre les positions et les orientations d'une torche de soudage dans le cas d'une réalisation d'une ligne de soudure de forme rectangulaire;
[Fig. 10] La figure 10 montre les positions et les orientations d'une torche de soudage dans le cas d'une réalisation d'une ligne de soudure en forme de L;
[Fig. 11] La figure 11 illustre la réalisation d'une soudure à l'intersection de deux pièces de forme cylindrique.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

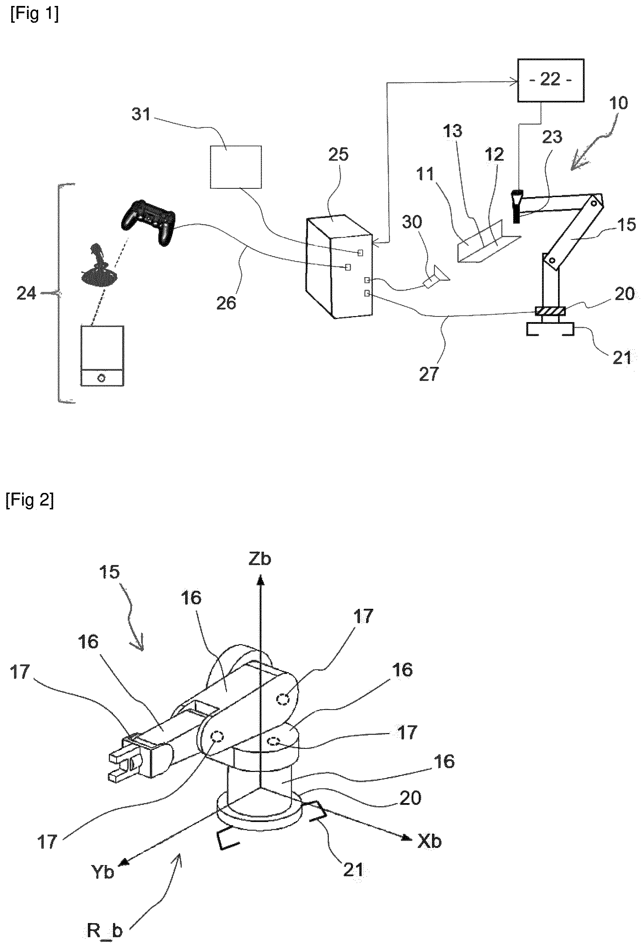

La figure 1 montre un système de soudage 10 permettant à un opérateur d'effectuer à distance des opérations de soudage entre deux pièces 11, 12 suivant une ligne de soudure 13.

A cet effet, le système de soudage 10 comporte un dispositif robotisé 15 pouvant prendre la forme d'un bras robotisé ou d'un robot cartésien ou de tout autre dispositif muni d'actionneurs apte à déplacer une torche de soudage pour effectuer une opération de soudage. Les actionneurs du dispositif robotisé 15 pourront être montés mécaniquement en série ou en parallèle les uns par rapport aux autres.

L'invention est décrite dans le cadre de l'utilisation d'un bras robotisé 15 montré sur la figure 2 muni de plusieurs parties 16 mobiles en rotation les unes par rapport aux autres via des articulations 17, prenant par exemple la forme de liaisons pivots ou de liaisons rotules. Des actionneurs sont disposés à l'endroit des articulations 17 pour permettre le déplacement du bras robotisé 15 dans les trois dimensions de l'espace.

Le bras robotisé 15 est associé à un repère de robot R_b ayant des axes Xb, Yb, Zb. Le repère de robot R_b est notamment associé à la base 20 du bras 15 tel que cela est illustré par la figure 2. La base 20 du bras 15 est destinée à être fixe lors de l'opération de soudage. A cet effet, la base 20 comporte des moyens de maintien amovibles 21, tels que des pinces de serrage, un système de clampage, ou tout autre système adapté à fixer le bras robotisé 15 sur ou à proximité des pièces 11, 12 à souder.

Avantageusement, afin de faciliter son transport à proximité des pièces 11, 12 à souder, le bras robotisé 15 comporte une structure réalisée dans un matériau allégé, notamment de l'aluminium ou un matériau composite. Le poids du bras robotisé 15 est de préférence inférieur à 10kg.

Le bras robotisé 15 porte à son extrémité une torche de soudage 23 qui pourra par exemple assurer un soudage avec apport de matière de type MIG (pour "Metal Inert Gas" en anglais) ou de type MAG (pour "Metal Active Gas" en anglais). Alternativement, on pourra utiliser une torche de type TIG (pour "Tungsten Inert Gas" en anglais) avec ou sans apport de matière, une torche laser, ou toute autre torche adaptée à l'application. La torche de soudage 23 est associée à un générateur de soudage 22. Les paramètres de soudage ainsi que la mise en fonctionnement et l'arrêt du générateur de soudage 22 pourront être commandés via l'envoi d'instructions par le système de commande 25 audit générateur de soudage 22.

Une interface homme-machine 24 est apte à générer un flux d'instructions de déplacement du bras robotisé 15 correspondant à des actions d'un opérateur. L'interface homme-machine 24 peut ainsi générer des instructions reflétant en temps réel les actions de l'opérateur humain. L'interface homme-machine 24 pourra prendre la forme d'une tablette numérique, d'un joystick, d'une manette, d'une souris, d'un trackball, d'un clavier, ou tout autre moyen de pilotage adapté à l'application.

Un système de commande 25 est apte à recevoir le flux d'instructions de déplacement issues de l'interface homme-machine 24 et à commander le bras robotisé 15 en fonction du flux d'instructions de déplacement reçues. Le système de commande 25 pourra notamment prendre la forme d'un ordinateur ou d'un serveur. Le système de commande 25 pourra comporter deux étages, à savoir un premier étage assurant la gestion du repère local R_loc et de l'interprétation des instructions issues de l'interface homme-machine 24 et un deuxième étage assurant la gestion de la transformée articulaire et de l'asservissement des actionneurs du bras robotisé 15. Ces deux étages pourront chacun être associé à une unité de commande distincte ou être intégrés dans une même unité de commande. Autrement dit, le système de commande 25 pourra être composé d'une seule unité de commande mettant en œuvre les deux étages dudit système de commande ou de deux unités de commande mettant chacune en œuvre un étage distinct dudit système de commande.

L'interface homme-machine 24 est reliée au système de commande 25 par l'intermédiaire d'une liaison de communication 26 de type filaire, par exemple une liaison de type USB. En variante, la liaison de communication 26 entre le système de commande 25 et l'interface homme-machine 24 est une liaison sans-fil, notamment de type radio-fréquence, comme par exemple une liaison de type WIFI ou Bluetooth. Alternativement, le système de commande 25 pourra être physiquement embarqué dans l'interface homme-machine 24.

Par ailleurs, le bras robotisé 15 est relié au système de commande 25 par l'intermédiaire d'une liaison de communication 27 de type filaire, par exemple de type Ethernet. En variante, la liaison de communication 27 entre le système de commande 25 et le bras robotisé 15 est une liaison sans-fil, notamment de type radio-fréquence, comme par exemple une liaison de type WIFI ou Bluetooth.

De préférence, le système 10 comporte en outre une caméra 30 disposée à proximité de la ligne de soudure 13 à suivre, et un écran de contrôle 31 affichant une image de la ligne de soudure 13 et de la torche de soudage 23 captée par la caméra 30. La présence de la caméra 30 et de l'écran de contrôle 31 n'est toutefois pas indispensable pour la mise en œuvre du procédé, l'évolution de la soudure pouvant être surveillée de visu par l'opérateur sans système de caméra.

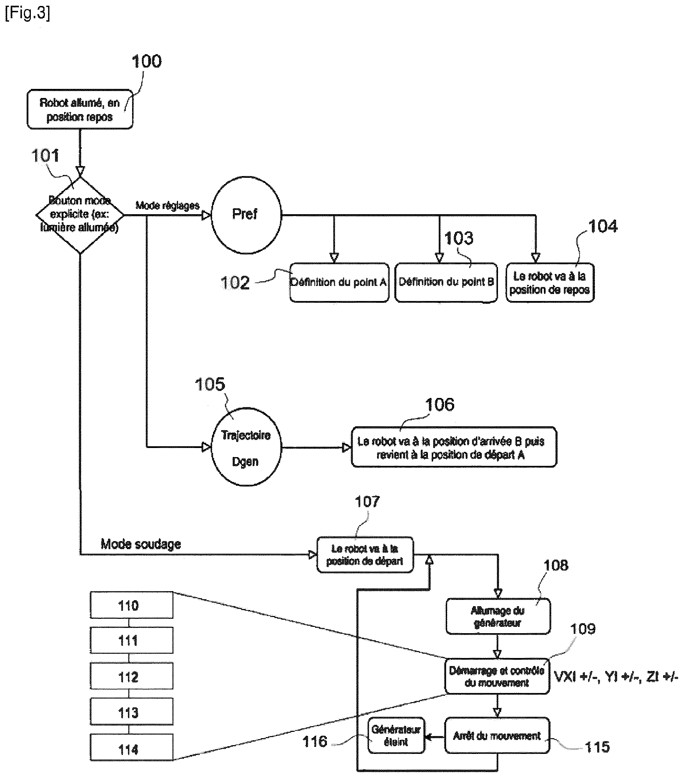

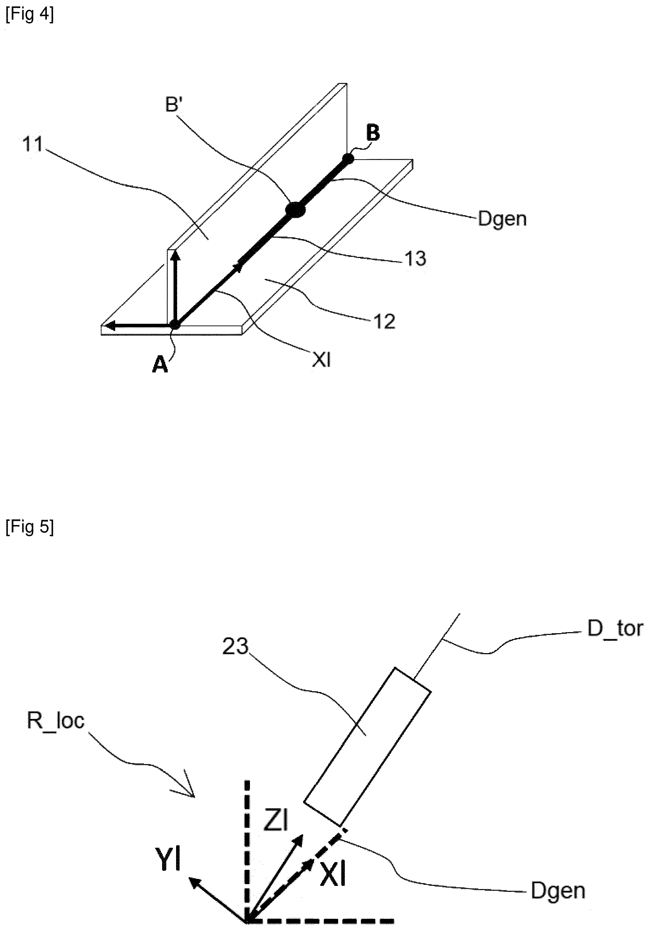

On décrit ci-après, en référence avec la figure 3, un exemple de mise en œuvre du procédé selon l'invention de soudage entre deux pièces 11 et 12 formant deux plans inclinés l'un par rapport à l'autre. L'intersection des deux pièces 11, 12 constitue une ligne de soudure 13 à suivre de forme rectiligne (cf. figure 4). Toutefois, comme cela est expliqué plus en détails ci-après, la ligne de soudure 13 pourra présenter une forme quelconque. L'exemple de la ligne rectiligne est donné pour faciliter la compréhension de l'invention.

Dans une étape 100, le bras robotisé 15 mis en fonctionnement se trouve dans une position de repos correspondant à une position par défaut dans laquelle les actionneurs sont activés de façon à compenser le poids du bras robotisé 15.

Dans une étape 101, l'opérateur sélectionne un "mode réglage" au cours duquel l'opérateur définit, à l'aide du bras robotisé 15, des points de référence Pref situés sur la ligne de soudure 13. Les points de référence Pref sont par exemple constitués par un point de départ de soudure A et un point d'arrivée de soudure B. Des points intermédiaires peuvent également être définis. Le point d'arrivée B peut être utilisé uniquement pour définir la direction générale de la soudure. L'opérateur pourra, si besoin, autoriser un déplacement de la torche de soudage 23 au-delà du point B.

A cet effet, dans une étape 102, l'opérateur déplace manuellement le bras robotisé 15 de façon à positionner la torche de soudage 23 au point de départ de soudure A et valide ce point via l'interface homme-machine 24. Dans une étape 103, l'opérateur déplace manuellement le bras robotisé 15 de façon à positionner la torche de soudage 23 au point d'arrivée de soudure B et valide ce point via l'interface homme-machine 24. A la fin de la sélection, le bras robotisé 15 revient en position de repos dans une étape 104. Alternativement, il serait toutefois possible de définir un point intermédiaire B' ne correspondant pas nécessairement au point d'arrivée de la soudure, c'est-à-dire à l'extrémité de la ligne de soudure.

Le système de commande 25 détermine, dans une étape 105, une direction générale de déplacement Dgen de la torche de soudage 23 à partir des points de référence Pref précédemment sélectionnés. La direction générale de déplacement Dgen est générée de façon automatique par le système sans intervention de l'opérateur. En l'occurrence, la direction générale de déplacement Dgen passe par les points de référence A et B. La direction générale de déplacement Dgen est ainsi une direction qui suit globalement la ligne de soudure 13 sans prendre en compte les irrégularités locales de ladite ligne de soudure 13.

Dans une étape 106, la torche de soudage 23 est déplacée par le bras robotisé 15 sans être activée depuis le point d'arrivée B jusqu'au point de départ A suivant la direction générale de déplacement Dgen pour s'assurer qu'il n'existe pas d'interférence entre la torche de soudage 23 et son environnement. A l'occasion de cette procédure, des points de dégagement situés à proximité des points de départ et d'arrivée pourront être utilisés afin d'éviter toute collision avec la pièce. Après avoir défini globalement un point de départ de soudure et un point d'arrivée de soudure, et validé une trajectoire par un trajet retour, l'opérateur pourra, si besoin, procéder à un réglage fin de la position de départ.

Afin d'effectuer la définition des points de référence Pref ainsi que la vérification de la trajectoire, on impose de préférence le maintien appuyé d'un bouton de l'interface homme-machine 24 pour des raisons de sécurité. On s'assure ainsi que tout mouvement du bras robotisé 15 est effectué en présence d'un opérateur.

Afin que l'opérateur soit en mesure de pouvoir piloter aisément la torche de soudage 23 lorsqu'elle est activée dans le mode soudage décrit plus en détails ci-après, un repère local R_loc est défini par rapport à la direction générale de déplacement Dgen de la torche de soudage 23, tel que cela est illustré par la figure 5. La définition du repère local R_loc permet de faciliter les calculs effectués par le système de commande 25 lors d'une demande de déplacement du bras robotisé 15 15 par l'opérateur par rapport à un mode de mise en œuvre dans lequel seul le repère robot serait utilisé. Le repère local R_loc est calculé de façon automatique par le système sans intervention de la part de l'opérateur.

Ce repère local R_loc comporte un axe XI confondu avec la direction générale de déplacement de la torche de soudage 23, un axe ZI correspondant à une projection d'une direction orientation D_tor de la torche de soudage 23 dans un plan perpendiculaire au premier axe XI, et un axe YI perpendiculaire au plan défini par l'axe XI et l'axe ZI. Ce repère local R_loc peut évoluer le long de la ligne de soudure 13, de telle façon que l'axe XI reste tangent à la ligne de soudure 13 dans le cas d'une ligne courbe. Alternativement, le repère local R_loc peut être défini par rapport aux pièces 11 et 12 plutôt que par rapport à la torche de soudage 23.

En mode soudage, le bras robotisé 15 déplace la torche de soudage 23 au point de départ A dans une étape 107. L'opérateur pourra toutefois ajuster le point de départ A si nécessaire et le repère local R_loc sera alors adapté en conséquence.

Pour commencer le soudage, l'opérateur appuie sur un bouton de sécurité de l'IHM 24 qui doit être de préférence maintenu jusqu'à la fin de phase de soudage. Dans le cas où le bouton de sécurité de l'IHM serait relâché, le bras robotisé 15 et/ou le générateur de soudage 22 sont mis à l'arrêt.

Suite à l'appui sur le bouton de sécurité, la torche de soudage 23 est mise en fonctionnement, dans une étape 108, de sorte que le point d'apport de chaleur atteigne une chaleur suffisante pour réaliser une soudure.

Dans une étape 109, le bras robotisé 15 commence à déplacer la torche de soudage automatiquement depuis le point de départ A de soudure suivant la direction générale de déplacement Dgen. Le mouvement peut être démarré sur une instruction particulière de l'opérateur à travers l'IHM, ou après un délai fixe ou paramétrable.

L'opérateur pourra vérifier le bon déroulement de l'opération de soudage à l'aide de l'écran de contrôle 31, ou directement de visu.

Dans le cas où l'opérateur s'aperçoit que la trajectoire de la torche de soudage 23 suivant la direction générale de déplacement Dgen n'est pas adaptée à la forme de la ligne de soudure 13 à suivre, l'opérateur pourra générer, dans une étape 110, un flux d'instruction de déplacement lié à des actions dudit opérateur sur l'interface homme-machine 24. Ce flux d'instructions de déplacement vise à écarter la torche de soudage 23 de la direction générale de déplacement Dgen de façon à adapter en temps réel une trajectoire de la torche de soudage 23 à une forme réelle de la ligne de soudure 13 entre les deux pièces 11 et 12.

Avantageusement, le déplacement automatique suivant l'axe local XI étant imposé par le bras robotisé 15, l'opérateur peut ajuster un déplacement de la torche de soudage 23 via l'interface homme-machine 24, uniquement selon l'axe local YI et/ou l'axe local ZI. Il est à noter qu'il n'y a aucune limitation particulière dans les déplacements que l'opérateur peut imposer au bras robotisé 15 dans le plan YI/ZI. Si besoin, l'opérateur pourra également adapter une vitesse de déplacement de la torche de soudage 23 suivant la direction générale de déplacement Dgen (soit suivant l'axe XI) via l'interface homme-machine 24. La vitesse de déplacement est encadrée entre une valeur minimale et une valeur maximale. Ces valeurs, de l'ordre de quelques dizaines de centimètres par minute, dépendent des paramètres de soudage. Les paramètres de soudage sont définis notamment par le courant, la tension du générateur de soudage, ainsi que la vitesse de fil dans le cas d'un procédé de soudure avec apport de matière.

De façon complémentaire et optionnelle, il est possible de régler une orientation angulaire de la torche de soudage 23 par rapport à la ligne de soudure 13.

Il est également possible de prévoir l'établissement d'une communication avec le générateur de soudage pour modifier les paramètres de soudage depuis l'interface homme-machine 24 et pour afficher ces paramètres de soudage sur l'interface homme-machine 24.

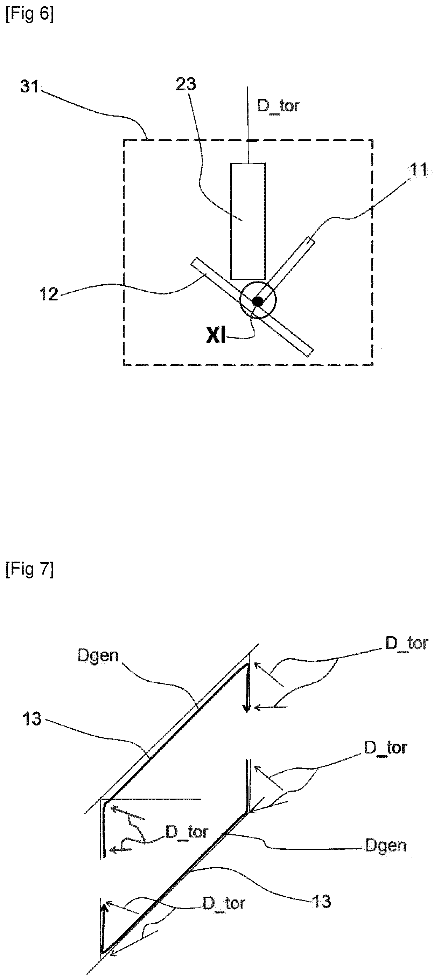

Avantageusement, dans le cas où une caméra 30 de contrôle est utilisée, un axe de la caméra 30 est confondu avec la direction générale de déplacement Dgen de sorte qu'une image affichée par l'écran de contrôle 31 se situe dans le plan YI/ZI, tel que cela est illustré par la figure 6. De préférence, la torche de soudage 23 est dirigée verticalement dans le plan YI/ZI de l'image. Cela facilite le contrôle du procédé pour l'opérateur qui ne voit que les axes suivant lesquels il peut commander un déplacement de la torche de soudage 23 pour en modifier sa trajectoire au cours de l'opération de soudage.

Le système de commande 25 traite ensuite, dans une étape 111, le flux d'instructions de déplacement généré par l'interface homme-machine 24 pour en déduire un vecteur de vitesse de consigne ou une position de consigne dans le repère local R_loc formé par les axes XI, YI, ZI.

Le système de commande 25 transpose, dans une étape 112, le vecteur de vitesse de consigne ou de la position de consigne dans le repère Xb, Yb, Zb, du bras robotisé 15.

Dans une étape 113, le bras robotisé 15 détermine alors, à partir de coordonnées du vecteur de vitesse de consigne ou de la position de consigne, des coordonnées articulaires correspondantes du bras robotisé 15.

Dans une étape 114, le bras robotisé 15 effectue ensuite un déplacement effectif de la torche de soudage 23 suivant les coordonnées articulaires précédemment déterminées correspondant au flux d'instructions généré par l'interface homme-machine 24. Cette étape utilise généralement une logique d'asservissement.

Avantageusement, une durée de latence entre un actionnement de l'IHM 24 par l'opérateur et un déplacement effectif de la torche de soudage 23 est inférieure à 450ms. Cette durée de latence réduite permet d'obtenir un comportement "temps réel" du procédé d'assistance au soudage. Une durée autorisée entre deux instructions est de préférence supérieure ou égale à la durée de latence. Toutefois, on pourra prévoir des cas où la durée entre deux instructions est inférieure à la durée de latence.

Le mouvement du bras robotisé 15 est arrêté dans une étape 115 lorsque l'opérateur relâche le bouton de sécurité ou que la soudure est terminée. La torche de soudage est alors éteinte dans une étape 116.

Alternativement, la direction générale de déplacement Dgen est une direction ayant une forme choisie notamment parmi: un cercle ou une portion de cercle, une forme ovale ou une portion de forme ovale, un polygone, notamment un carré ou un rectangle, ou une portion de polygone, une intersection de deux cylindres ou une portion d'intersection de deux cylindres, ou une courbe quelconque 2D ou 3D ou toute autre forme.

Sur la figure 7, les positions et les orientations D_tor de la torche de soudage 23 sont représentées dans le cas d'une réalisation d'une ligne de soudure 13 et d'une direction générale de déplacement correspondante Dgen en forme de U.

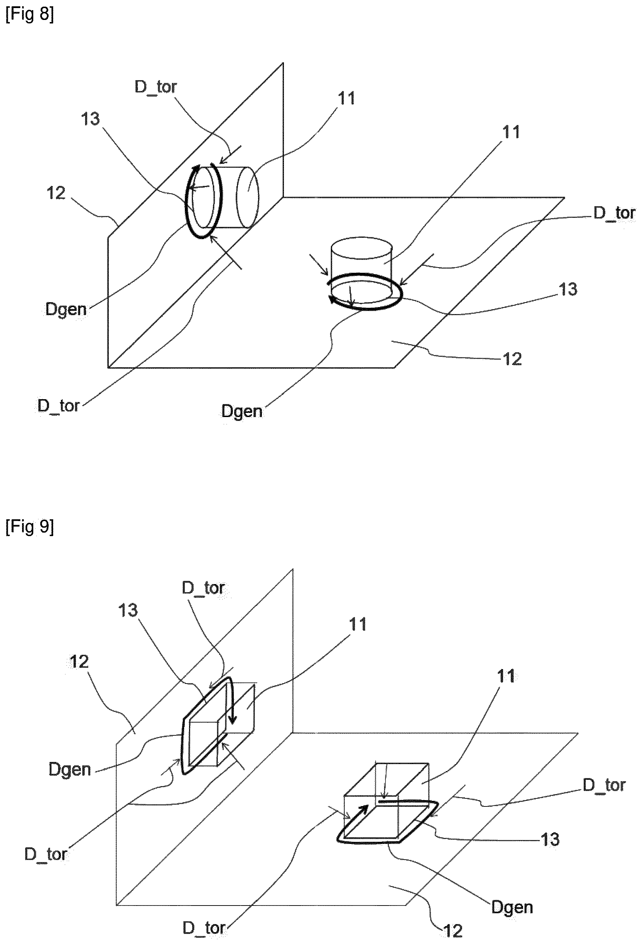

Sur la figure 8, les positions et les orientations D_tor d'une torche de soudage 23 sont représentées dans le cas d'une réalisation d'une ligne de soudure 13 et d'une direction générale de déplacement correspondante Dgen de forme circulaire. Une telle ligne de soudure 13 correspond à l'intersection entre une pièce 11 à souder de forme cylindrique et une pièce 12 de forme plane.

Sur la figure 9, les positions et les orientations D_tor d'une torche de soudage 23 sont représentées dans le cas d'une réalisation d'une ligne de soudure 13 et d'une direction générale de déplacement correspondante Dgen de forme rectangulaire. Une telle ligne de soudure 13 correspond à l'intersection entre une pièce 11 à souder de forme parallélépipédique et une pièce 12 de forme plane.

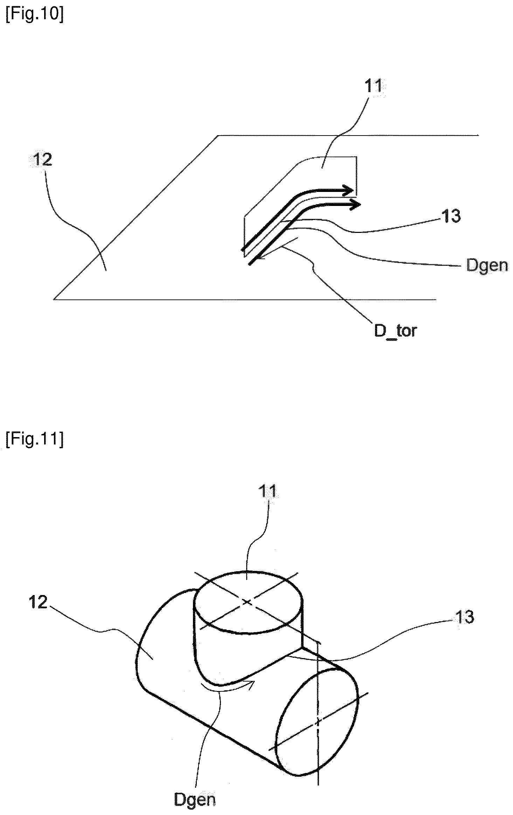

Sur la figure 10, les positions et les orientations d'une torche de soudage 23 sont représentées dans le cas d'une réalisation d'une ligne de soudure 13 et d'une direction générale de déplacement correspondante Dgen en forme de L.

La figure 11 illustre une ligne de soudure 13 et une direction générale de déplacement correspondante Dgen correspondant à l'intersection de deux pièces 11, 12 en forme de cylindre.

Comme indiqué précédemment, l'opérateur pourra sélectionner des points de référence Pref à différents endroits de la ligne de soudure 13 de façon à pouvoir déterminer une direction générale de déplacement Dgen passant par ces points de référence.

En variante ou en complément, l'opérateur pourra sélectionner des points de référence sur les pièces 11, 12 à souder pour en déduire la direction générale de déplacement Dgen. Par exemple, la sélection de trois points de référence sur une première pièce plane 11 et la sélection de trois autres points de référence sur la deuxième pièce plane 12 permettent de déterminer l'intersection entre les deux plans des pièces 11 et 12 correspondant à la direction générale de déplacement Dgen.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications, formes alternatives et autres variantes entrant dans le champ d'application des revendications annexées.

## Revendications

1. Procédé d'assistance au soudage entre deux pièces (11, 12) suivant une ligne de soudure (13) à l'aide d'un système de soudage (10) permettant à un opérateur d'effectuer à distance des opérations de soudage, ledit système de soudage (10) comportant:
- un dispositif robotisé (15) portant une torche de soudage (23), ledit dispositif robotisé (15) étant associé à un repère de robot (Xb, Yb, Zb),
- une interface homme-machine (24) apte à générer des instructions de déplacement du dispositif robotisé (15), et
- un système de commande (25) apte à recevoir les instructions de déplacement issues de l'interface homme-machine (24) et à commander le dispositif robotisé (15) en fonction des instructions de déplacement reçues via une liaison de communication,
**caractérisé en ce que** ledit procédé d'assistance au soudage comporte:
- une étape de définition par l'opérateur de points de référence (Pref) sur les pièces (11, 12) à souder et/ou sur la ligne de soudure (13) à suivre,
- une étape de définition d'une direction générale de déplacement (Dgen) de la torche de soudage (23) à partir des points de référence (Pref),
- une étape de définition d'un repère local (R_loc) par rapport à la direction générale de déplacement (Dgen) de la torche de soudage (23),
- une étape de déplacement automatique de la torche de soudage (23) depuis un point de départ de soudure (A) suivant la direction générale de déplacement (Dgen),
- une étape de génération d'un flux d'instructions de déplacement lié à des actions de l'opérateur sur l'interface homme-machine (24) visant à écarter la torche de soudage (23) de la direction générale de déplacement (Dgen) de façon à adapter en temps réel une trajectoire de la torche de soudage (23) à une forme réelle de la ligne de soudure (13),
- une étape de traitement, par le système de commande (25), du flux d'instructions de déplacement généré par l'interface homme-machine (24) pour en déduire un vecteur de vitesse de consigne ou une position de consigne dans le repère local (R_loc), et
- une étape de déplacement effectif de la torche de soudage (23) correspondant au vecteur de vitesse de consigne ou à la position de consigne dans le repère local (R_loc).

2. Procédé selon la revendication 1, **caractérisé en ce que**, pour assurer le déplacement effectif de la torche, ledit procédé comporte :
- une étape de transposition du vecteur de vitesse de consigne ou de la position de consigne dans le repère de robot (Xb, Yb, Zb),
- une étape de détermination, à partir de coordonnées du vecteur de vitesse de consigne ou de la position de consigne dans le repère de robot (Xb, Yb, Zb), de coordonnées articulaires du dispositif robotisé (15), et
- une étape de déplacement effectif de la torche de soudage (23) suivant les coordonnées articulaires précédemment déterminées.

3. Procédé selon la revendication 1 ou 2, **caractérisé en ce que** la direction générale de déplacement (Dgen) est une direction ayant une forme choisie notamment parmi: une ligne droite, un cercle ou une portion de cercle, une forme ovale ou une portion de forme ovale, un polygone ou une portion de polygone, une intersection de deux cylindres ou une portion d'intersection de deux cylindres, ou une courbe quelconque 2D ou 3D.

4. Procédé selon l'une quelconque des revendications 1 à 3, **caractérisé en ce qu'**il comporte une étape préalable de réglage suivant laquelle, suite à la définition de points de référence (Pref) constitués par un point de départ de soudure (A) et un point d'arrivée de soudure (B) et de la direction générale de déplacement (Dgen) de la torche de soudage (23), ladite torche de soudage (23) se déplace depuis un point de dégagement situé à proximité du point d'arrivée de soudure (B) jusqu'à un point de dégagement situé à proximité du point de départ de soudure (A) pour s'assurer qu'il n'existe pas d'interférence entre la torche de soudage (23) et son environnement pour effectuer la soudure.

5. Procédé selon l'une quelconque des revendications 1 à 4, **caractérisé en ce qu'**après une étape de définition globale d'un point de départ de soudure et un point d'arrivée de soudure, et une étape de validation d'une trajectoire par un trajet retour, ledit procédé comporte une étape de réglage fin de la position de départ.

6. Procédé selon l'une quelconque des revendications 1 à 5, **caractérisé en ce qu'**une durée de latence entre un actionnement de l'interface homme-machine (24) par l'opérateur et un déplacement effectif de la torche de soudage (23) est inférieure à 450ms.

7. Procédé selon l'une quelconque des revendications 1 à 6, **caractérisé en ce que** le repère local (R_loc) comporte un axe XI confondu avec la direction générale de déplacement de la torche de soudage (23), un axe ZI correspondant à une projection d'une direction d'orientation (D_tor) de la torche de soudage (23) dans un plan perpendiculaire à l'axe XI, et un axe YI perpendiculaire au plan défini par l'axe XI et l'axe ZI.

8. Procédé selon la revendication 7, **caractérisé en ce qu'**un déplacement automatique suivant l'axe XI étant imposé par le dispositif robotisé (15), l'opérateur peut ajuster un déplacement de la torche de soudage (23) via l'interface homme-machine (24), uniquement selon l'axe YI et/ou l'axe ZI.

9. Procédé selon la revendication 7 ou 8, **caractérisé en ce que** dans le cas d'une ligne de soudure (13) courbe, le repère local (R_loc) peut évoluer le long de la ligne de soudure (13), de telle façon que l'axe (XI) reste tangent à la ligne de soudure (13).

10. Procédé selon l'une quelconque des revendications 7 à 9, **caractérisé en ce qu'**il comporte en outre l'étape d'adapter une vitesse de déplacement de la torche de soudage (23) suivant l'axe XI via l'interface homme-machine (24).

11. Procédé selon la revendication 10, **caractérisé en ce que** la vitesse de déplacement est encadrée entre une valeur minimale et une valeur maximale.

12. Procédé selon l'une quelconque des revendications 1 à 11, **caractérisé en ce qu'**il comporte une étape de réglage d'une orientation angulaire de la torche de soudage (23) par rapport à la ligne de soudure (13).

13. Procédé selon l'une quelconque des revendications 1 à 12, **caractérisé en ce que** le système de soudage (10) comporte en outre une caméra (30), et un écran de contrôle (31) affichant une image de la ligne de soudure (13) et de la torche de soudage (23) captée par la caméra (30).

14. Procédé selon l'une quelconque des revendications 1 à 13, **caractérisé en ce qu'**il comporte une étape d'établissement d'une communication avec un générateur de soudage (22) pour modifier des paramètres de soudage depuis l'interface homme-machine (23) et pour afficher ces paramètres de soudage sur l'interface homme-machine (23).

15. Procédé selon l'une quelconque des revendications 1 à 14, **caractérisé en ce que** le dispositif robotisé (15) comporte plusieurs actionneurs montés mécaniquement en série les uns par rapport aux autres.

## Patentansprüche

1. Verfahren zur Unterstützung eines Schweißprozesses zwischen zwei Werkstücken (11, 12) entlang einer Schweißnaht (13) mit Hilfe eines Schweißsystems (10), das es einem Bediener ermöglicht, Schweißvorgänge ferngesteuert durchzuführen, wobei das Schweißsystem (10) umfasst:
- eine Robotervorrichtung (15) mit einem Schweißbrenner (23), wobei diese Robotervorrichtung (15) einem Roboter-Referenzrahmen (Xb, Yb, Zb) zugeordnet ist,
- eine Mensch-Maschine-Schnittstelle (24), die Bewegungsanweisungen für die Robotervorrichtung (15) generieren kann, und
- ein Steuerungssystem (25), das Bewegungsanweisungen von der Mensch-Maschine-Schnittstelle (24) empfangen und die Robotervorrichtung (15) gemäß den über eine Kommunikationsverbindung empfangenen Bewegungsanweisungen steuern kann,
**gekennzeichnet dadurch, dass** das Verfahren zur Unterstützung eines Schweißprozesses umfasst:
- einen Schritt, in dem der Bediener Referenzpunkte (Pref) an den zu verschweißenden Werkstücken (11, 12) und/oder an der nachzufolgenden Schweißnaht (13) definiert,
- einen Schritt, in dem eine allgemeine Bewegungsrichtung (Dgen) des Schweißbrenners (23) von den Bezugspunkten (Pref) aus definiert wird,
- einen Schritt, in dem ein lokales Bezugssystem (R_loc) in Bezug auf die allgemeine Bewegungsrichtung (Dgen) des Schweißbrenners (23) definiert wird,
- einem Schritt, in dem der Schweißbrenner (23) automatisch von einem Schweißstartpunkt (A) entlang der allgemeinen Bewegungsrichtung (Dgen) bewegt wird,
- einen Schritt, in dem ein Fluss von Bewegungsanweisungen generiert wird, die mit den Aktionen des Bedieners an der Mensch-Maschine-Schnittstelle (24) verknüpft sind, um den Schweißbrenner (23) von der allgemeinen Bewegungsrichtung (Dgen) wegzubewegen, um in Echtzeit eine Trajektorie des Schweißbrenners (23) an die tatsächliche Form der Schweißnaht (13) anzupassen.
- einen Schritt, in dem der von der Mensch-Maschine-Schnittstelle (24) generierte Fluss von Bewegungsanweisungen vom Steuerungssystem (25) verarbeitet wird, um einen Sollgeschwindigkeitsvektor oder eine Sollposition im lokalen Bezugssystem (R_loc) abzuleiten, und
- einen Schritt, in dem der Schweißbrenner (23) entsprechend dem Sollgeschwindigkeitsvektor oder der Sollposition im lokalen Koordinatensystem (R_loc) effektiv bewegt wird.

2. Verfahren nach Anspruch 1, **dadurch gekennzeichnet, dass** zur Gewährleistung der effektiven Bewegung des Schweißbrenners das Verfahren umfasst:
- einen Schritt, in dem der Sollgeschwindigkeitsvektor oder die Sollposition in das Roboterkoordinatensystem (Xb, Yb, Zb) transponiert wird,
- einen Schritt, in dem die Gelenkkoordinaten der Robotervorrichtung (15) aus den Koordinaten des Sollgeschwindigkeitsvektors oder der Sollposition im Roboterkoordinatensystem (Xb, Yb, Zb) bestimmt werden, und
- einen Schritt, in dem der Schweißbrenner (23) entsprechend den zuvor ermittelten Verbindungskoordinaten effektiv bewegt wird.

3. Verfahren nach Anspruch 1 oder 2, **dadurch gekennzeichnet, dass** die allgemeine Bewegungsrichtung (Dgen) eine Richtung mit einer Form ist, die insbesondere aus Folgendem ausgewählt ist: einer Geraden, einem Kreis oder einem Teil eines Kreises, einer ovalen Form oder einem Teil einer ovalen Form, einem Polygon oder einem Teil eines Polygons, dem Schnittpunkt zweier Zylinder oder einem Teil des Schnittpunkts zweier Zylinder oder einer beliebigen 2D- oder 3D-Kurve.

4. Verfahren nach einem der Ansprüche 1 bis 3, **dadurch gekennzeichnet, dass** es einen Voreinstellungsschritt umfasst, in dem nach der Definition von Referenzpunkten (Pref), bestehend aus einem Schweißstartpunkt (A) und einem Schweißendpunkt (B) sowie der allgemeinen Bewegungsrichtung (Dgen) des Schweißbrenners (23), der Schweißbrenner (23) von einem Abstandspunkt nahe dem Schweißendpunkt (B) zu einem Abstandspunkt nahe dem Schweißstartpunkt (A) bewegt wird, um sicherzustellen, dass es beim Schweißvorgang zu keiner Beeinträchtigung zwischen dem Schweißbrenner (23) und seiner Umgebung kommt.

5. Verfahren nach einem der Ansprüche 1 bis 4, **dadurch gekennzeichnet, dass** nach einem Schritt der globalen Definition eines Schweißstartpunkts und eines Schweißendpunkts sowie einem Schritt der Validierung einer Trajektorie mittels eines Rückwegs das Verfahren einen Schritt zum Feinjustieren der Startposition umfasst.

6. Verfahren nach einem der Ansprüche 1 bis 5, **dadurch gekennzeichnet, dass** die Latenzzeit zwischen einer Betätigung der Mensch-Maschine-Schnittstelle (24) durch den Bediener und einer effektiven Bewegung des Schweißbrenners (23) weniger als 450ms beträgt.

7. Verfahren nach einem der Ansprüche 1 bis 6, **dadurch gekennzeichnet, dass** das lokale Koordinatensystem (R_loc) eine Xl-Achse umfasst, die mit der allgemeinen Bewegungsrichtung des Schweißbrenners (23) übereinstimmt, eine Zl-Achse, die einer Projektion der Orientierungsrichtung (D_tor) des Schweißbrenners (23) in eine senkrechte zur Xl-Achse Ebene entspricht, und eine Yl-Achse, die senkrecht zu der durch die Xl-Achse und die Zl-Achse definierten Ebene steht.

8. Verfahren nach Anspruch 7, **dadurch gekennzeichnet, dass**, wenn eine automatische Bewegung entlang der Xl-Achse durch die Robotervorrichtung (15) vorgegeben wird, der Bediener die Bewegung des Schweißbrenners (23) über die Mensch-Maschine-Schnittstelle (24) nur entlang der Yl-Achse und/oder der Zl-Achse einstellen kann.

9. Verfahren nach Anspruch 7 oder 8, **dadurch gekennzeichnet, dass** sich im Falle einer gekrümmten Schweißnaht (13) das lokale Bezugssystem (R_loc) entlang der Schweißnaht (13) so bewegen kann, dass die Achse (Xl) tangential zur Schweißnaht (13) bleibt.

10. Verfahren nach einem der Ansprüche 7 bis 9, **dadurch gekennzeichnet, dass** es ferner den Schritt umfasst, in dem die Bewegungsgeschwindigkeit des Schweißbrenners (23) entlang der Xl-Achse über die Mensch-Maschine-Schnittstelle (24) angepasst wird.

11. Verfahren nach Anspruch 10, **dadurch gekennzeichnet, dass** die Bewegungsgeschwindigkeit zwischen einem Minimalwert und einem Maximalwert liegt.

12. Verfahren nach einem der Ansprüche 1 bis 11, **dadurch gekennzeichnet, dass** es einen Schritt umfasst, in dem die Winkelorientierung des Schweißbrenners (23) relativ zur Schweißnaht (13) eingestellt wird.

13. Verfahren nach einem der Ansprüche 1 bis 12, **dadurch gekennzeichnet, dass** das Schweißsystem (10) ferner eine Kamera (30) und einen Monitor (31), der ein von der Kamera (30) aufgenommenes Bild der Schweißnaht (13) und des Schweißbrenners (23) anzeigt, umfasst.

14. Verfahren nach einem der Ansprüche 1 bis 13, **dadurch gekennzeichnet, dass** es einen Schritt umfasst, in dem eine Kommunikationsverbindung mit einem Schweißgenerator (22) hergestellt wird, um Schweißparameter über die Mensch-Maschine-Schnittstelle (23) zu ändern und diese Schweißparameter auf der Mensch-Maschine-Schnittstelle (23) anzuzeigen.

15. Verfahren nach einem der Ansprüche 1 bis 14, **dadurch gekennzeichnet, dass** die Robotervorrichtung (15) mehrere Aktuatoren umfasst, die mechanisch in Reihe zueinander geschaltet sind.

## Claims

1. A method for assisting a process welding between two parts (11, 12) along a welding line (13) with the help of a welding system (10) that allows an operator to remotely perform welding operations, said welding system (10) comprising:
- a robotic device (15) carrying a welding torch (23), said robotic device (15) being associated with a robot reference frame (Xb, Yb, Zb),
- a human-machine interface (24) able to generate movement instructions for the robotic device (15), and
- a control system (25) able to receive movement instructions from the human-machine interface (24) and to control the robotic device (15) according to the movement instructions received via a communication link,
**characterized in that** said method for assisting a welding process comprises:
- a step in which the operator defines reference points (Pref) on the parts (11, 12) to be welded and/or on the welding line (13) to be followed,
- a step in which a general direction of movement (Dgen) of the welding torch (23) is defined from the reference points (Pref),
- a step in which a local reference frame (R_loc) is defined with respect to the general direction of movement (Dgen) of the welding torch (23),
- a step in which the welding torch (23) is automatically moved from a weld start point (A) along the general direction of movement (Dgen),
- a step in which a flow of movement instructions linked to actions of the operator on the human-machine interface (24) is generated for moving the welding torch (23) away from the general direction of movement (Dgen) so as to adapt in real time a trajectory of the welding torch (23) to an actual shape of the welding line (13),
- a step in which the flow of movement instructions generated by the human-machine interface (24) is processed by the control system (25) in order to deduce a desired velocity vector or a desired position in the local reference frame (R_loc), and
- a step in which the welding torch (23) is effectively moved in correspondence to the desired velocity vector or the desired position in the local frame (R_loc).

2. A method according to claim 1, **characterized in that**, in order to ensure the effective movement of the torch, said method comprises:
- a step in which the desired velocity vector or desired position is transposed into the robot frame (Xb, Yb, Zb),
- a step in which joint coordinates of the robotic device (15) are determined from coordinates of the desired velocity vector or desired position in the robot frame (Xb, Yb, Zb), and
- a step in which the welding torch (23) is effectively moved according to the joint coordinates previously determined.

3. A method according to claim 1 or 2, **characterized in that** the general direction of movement (Dgen) is a direction having a shape chosen in particular from: a straight line, a circle or a portion of a circle, an oval shape or a portion of an oval shape, a polygon or a portion of a polygon, an intersection of two cylinders or a portion of the intersection of two cylinders, or any 2D or 3D curve.

4. A method according to any one of the claims 1 to 3, **characterized in that** it comprises a presetting step in which, following the definition of reference points (Pref) consisting of a weld start point (A) and a weld end point (B) and the general direction of movement (Dgen) of the welding torch (23), said welding torch (23) moves from a clearance point near the weld end point (B) to a clearance point near the weld start point (A) to ensure that there is no interference between the welding torch (23) and the environment thereof in order to perform the welding process.

5. A method according to any one of the claims 1 to 4, **characterized in that** after a step of global definition of a weld start point and a weld end point, and a step of validation of a trajectory by a return path, said method includes a step of fine adjustment of the start position.

6. A method according to any one of the claims 1 to 5, **characterized in that** a latency period between an actuation of the human-machine interface (24) by the operator and an effective movement of the welding torch (23) is less than 450ms.

7. A method according to any one of the claims 1 to 6, **characterized in that** the local frame (R_loc) comprises an axis Xl coinciding with the general direction of movement of the welding torch (23), an axis Zl corresponding to a projection of a direction of orientation (D_tor) of the welding torch (23) into a plane perpendicular to the axis Xl, and an axis Yl perpendicular to the plane defined by the axis Xl and the axis Zl.

8. A method according to claim 7, **characterized in that**, when an automatic movement along the Xl axis is imposed by the robotic device (15), the operator can adjust a movement of the welding torch (23) via the human-machine interface (24), only along the axis Yl and/or the axis Zl.

9. A method according to claim 7 or 8, **characterized in that**, in the case of a curved welding line (13), the local reference frame (R_loc) can evolve along the welding line (13), in such a way that the axis (Xl) remains tangent to the welding line (13).

10. A method according to any one of the claims 7 to 9, **characterized in that** it further comprises the step in which a moving speed of the welding torch (23) along the axis Xl is adapted via the human-machine interface (24).

11. A method according to claim 10, **characterized in that** the moving speed is comprised between a minimum value and a maximum value.

12. A method according to any one of the claims 1 to 11, **characterized in that** it comprises a step in which an angular orientation of the welding torch (23) relative to the welding line (13) is adjusted.

13. A method according to any one of the claims 1 to 12, **characterized in that** the welding system (10) further comprises a camera (30), and a monitor (31) displaying an image of the welding line (13) and welding torch (23) captured by the camera (30).

14. A method according to any one of the claims 1 to 13, **characterized in that** it comprises a step in which a communication link with a welding generator (22) is established in order to modify welding parameters from the human-machine interface (23) and to display these welding parameters on the human-machine interface (23).

15. A method according to any one of the claims 1 to 14, **characterized in that** the robotic device (15) comprises several actuators mechanically mounted in series with respect to each other.
